# EUROPEAN PATENT APPLICATION

(11) **EP 4 811 230 A1**
(43) Date of publication of application: **23.09.2026**
(21) Application number: 25165472.9
(22) Date of filing: 21.03.2025
(51) Int. Cl.: G06Q 10/00, G06Q 50/04

(54) **METHOD FOR MANAGING INFORMATION OF OBJECT**

(71) Applicant: RiConnect, Inc., Taichung City 406 (TW)
(72) Inventor: HONG, RONG-DER, 406 Taichung City (TW); WANG, HSIN-LUNG, 406 Taichung City (TW)
(74) Representative: Cabinet Chaillot

(57) **Abstract**

A method for managing information of an object (50) includes: connecting an electronic device (20) to a server (10) and creating, by the electronic device (20), an object form (70, 88) in the server (10), wherein the object form (70, 88) includes a plurality of data fields (72), including a plurality of first data fields (722) and a plurality of second data fields (724); reading, by the electronic device (20), an RFID tag (60) to obtain a unique identifier code of the RFID tag (60) and transmitting, by the electronic device (20), the unique identifier code to the server (10); writing, through the electronic device (20), a link URL into the RFID tag (60); and transmitting, by the server (10), the second data fields (724) of the object form (70, 88) to a storage platform (30), thereby forming a set of object information. The link URL is linked to a digital product passport webpage (82) on the storage platform (30), which is linked to the set of object information.

## Description

### BACKGROUND OF THE INVENTION

### Technical Field

The present invention relates to object management, and more particularly to a method for managing information of an object.

### Description of Related Art

In order to manage different objects, a producer or a manager of the objects typically records a plurality of basic information of each object, such as specifications and usage instructions, and compile the basic information of each object into a plurality of paper documents. However, the paper documents are susceptible to environmental factors, leading to damage, information loss, or illegibility. Additionally, the paper documents could be easily misplaced or lost during handling, further increasing management difficulties. Especially when managing a large number of the objects, the efficiency of retrieving the basic information of the objects significantly decreases.

Furthermore, the use of paper also imposes an environmental burden, especially in the context of today's society, which advocates sustainable development. Excessive paper usage contradicts environmental principles. Companies are expected to manage the objects in a more eco-friendly manner, not only to enhance their corporate image but also to fulfill their social responsibility.

Therefore, developing a digital solution that improves management efficiency, reduces dependence on paper, and promotes environmental sustainability is an urgent issue for enterprises.

### BRIEF SUMMARY OF THE INVENTION

In view of the above, the primary objective of the present invention is to provide a method for managing information of an object, which could digitize the information of the object, improve management efficiency, and reduce paper waste.

The present invention provides a method for managing information of an object, including steps of:
A. connecting an electronic device to a server and creating, by the electronic device, an object form in the server, wherein the object form includes a plurality of data fields; the data fields include a plurality of first data fields and a plurality of second data fields;
B. reading, by the electronic device, an RFID tag to obtain a unique identifier code of the RFID tag and transmitting, by the electronic device, the unique identifier code to the server;
C. writing, through the electronic device, a link URL into the RFID tag, wherein the link URL corresponds to the unique identifier code; and
D. transmitting, by the server, the second data fields of the object form to a storage platform, thereby forming a set of object information; a digital product passport webpage stored in the storage platform is linked to the set of object information; the link URL is used to link to the digital product passport webpage of the storage platform.

The second data fields of the object form could form the set of object information, which is transmitted to the storage platform. The link URL of the RFID tag could link to the digital product passport webpage of the storage platform, and the digital product passport webpage is linked to the set of object information. This achieves the goals of digitizing the information of the object, improving management efficiency, and reducing paper waste. Furthermore, it is worth noting that the digital product passport webpage is stored in the storage platform, meaning that accessing the digital product passport webpage would not affect the performance of the server.

### BRIEF DESCRIPTION OF THE SEVERAL VIEWS OF THE DRAWINGS

The present invention would be best understood by referring to the following detailed description of some illustrative embodiments in conjunction with the accompanying drawings, in which
FIG. 1 is a block diagram of the system for managing the information of the object according to a first embodiment of the present invention;
FIG. 2 is a flowchart of the method for managing the information of the object according to the first embodiment of the present invention;
FIG. 3 is a schematic view of the method for managing the information of the object, showing the object form, according to the first embodiment of the present invention;
FIG. 4 is a schematic view of the method for managing the information of the object, showing the digital product passport webpage, according to the first embodiment of the present invention;
FIG. 5 is a flowchart of the method for managing the information of the object, showing the additional steps, according to the first embodiment of the present invention;
FIG. 6 is a flowchart of the method for managing the information of the object, showing the additional steps, according to the first embodiment of the present invention;
FIG. 7 is a schematic view of the method for managing the information of the object, showing the object form, according to a second embodiment of the present invention.

### DETAILED DESCRIPTION OF THE INVENTION

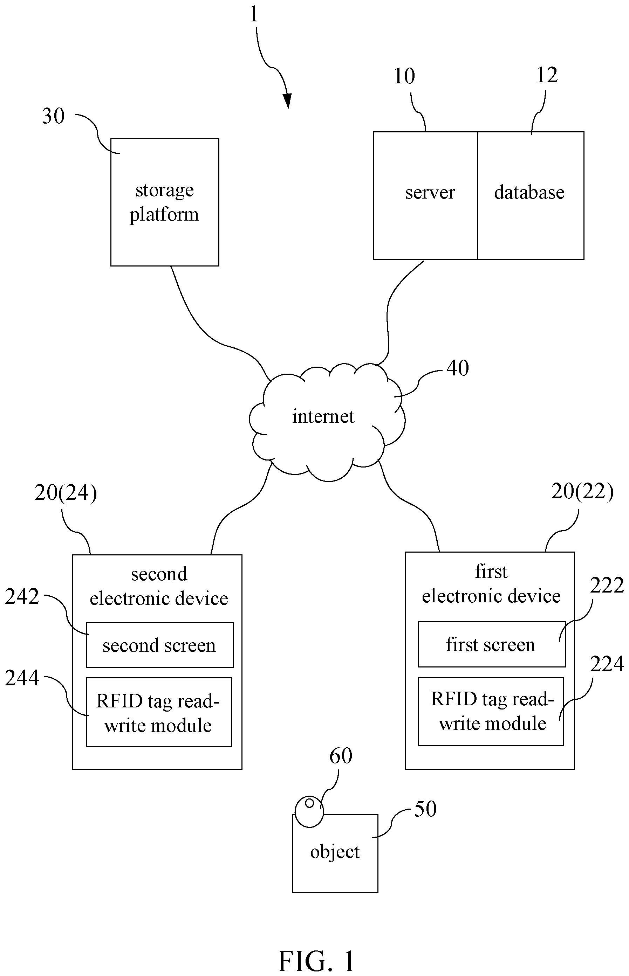

A system for managing information of an object 50, applied in a method for managing the information of the object 50 according to a first embodiment of the present invention, is illustrated in FIG. 1 and includes a server 10, at least one electronic device 20, and a storage platform 30. The server 10, the at least one electronic device 20, and the storage platform 30 are connected to each other via internet 40.

The server 10 is configured to run an object management software and is connected to a database 12. The server 10 is configured to manage the information of one or a plurality of objects 50, with one object 50 used as an example. The object 50 is exemplified by a hanging device, such as a hook, a buckle carabiner, a fall arrester, or a shackle. An RFID tag (Radio Frequency Identification tag) 60 is disposed on the object 50. The RFID tag 60 has a unique identifier code (UID) and a memory (not shown).

In the current embodiment, the number of the at least one electronic device 20 is plural, and each electronic device 20 could be a smartphone, a tablet computer, a personal computer, or a laptop, and is connected to the internet 40 via wired or wireless means. The electronic devices 20 are defined as a first electronic device 22 and a second electronic device 24. The first electronic device 22 is operated by a first user, with the first user being a manager of the object 50 as an example. The second electronic device 24 is operated by a second user, with the second user being an end user of the object 50 as an example. The first electronic device 22 includes a first screen 222 and an RFID tag read-write module 224. The RFID tag read-write module 224 of the first electronic device 22 is used to read the RFID tag 60 to obtain the unique identifier code and to write a link URL into the memory of the RFID tag 60. The RFID tag read-write module 224 could be built into a main body of the first electronic device 22 or be located externally from the main body of the first electronic device 22 and connected to the main body via a signal line. The second electronic device 24 includes a second screen 242 and an RFID tag read-write module 244. The RFID tag read-write module 244 of the second electronic device 24 is used to read the unique identifier code of the RFID tag 60 and data in the memory. The RFID tag read-write module 244 could be built into the second electronic device 24 or be located externally from the second electronic device 24 and connected to the second electronic device 24 via a signal line.

The storage platform 30 provides a storage space. The storage space is used to store one or more files related to the object 50.

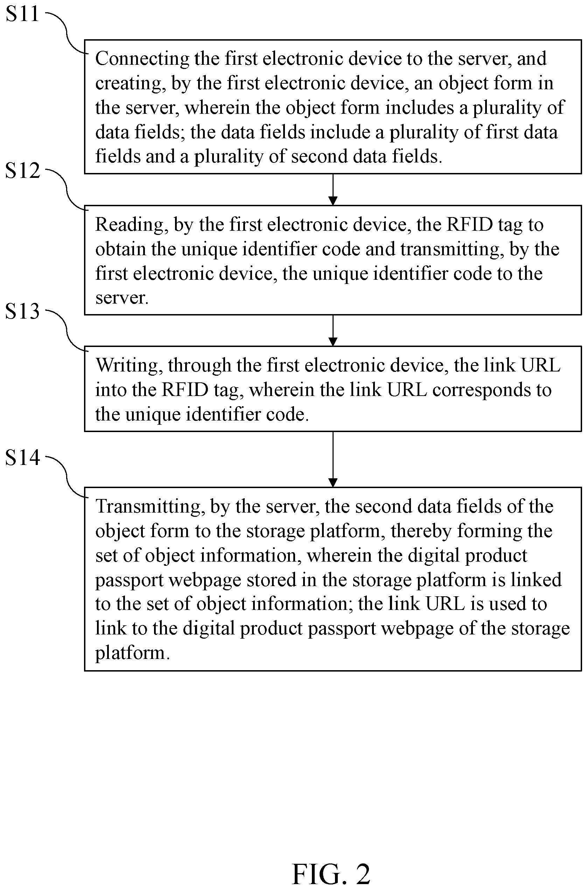

Through the above structure, the method for managing the information of the object in the current embodiment could be performed. As shown in FIG. 2, the method for managing the information of the object includes the following steps:

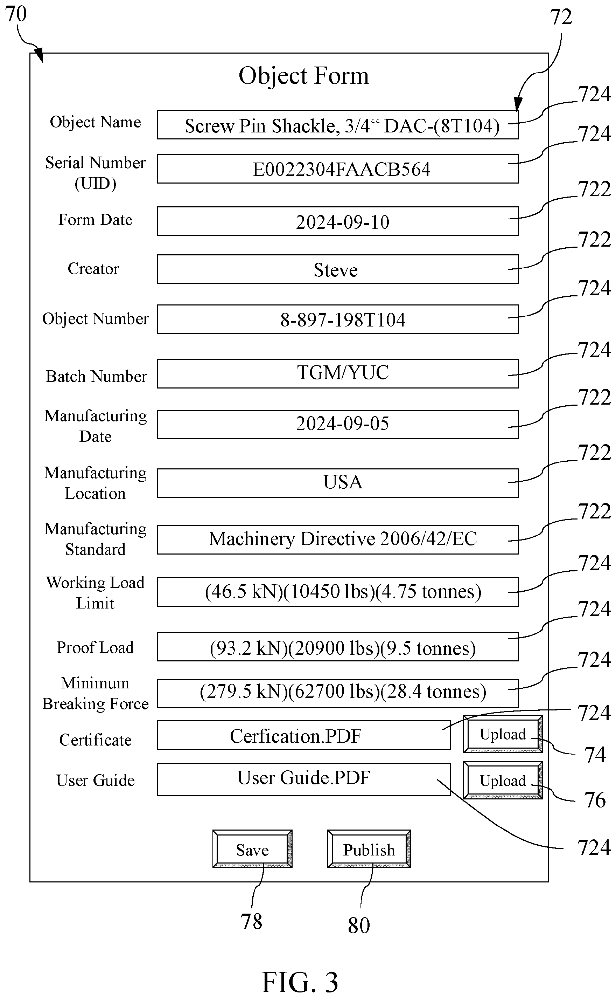

Step S11: connecting the first electronic device 22 to the server 10, and creating, by the first electronic device 22, an object form 70 (as shown in FIG. 3) in the server 10, wherein the object form 70 includes a plurality of data fields 724; the data fields 724 include a plurality of first data fields 722 and a plurality of second data fields 724.

In the current embodiment, the object form 70 is displayed on the first screen 222. Each data field 72 of the object form 70 is designed to record the information of the object 50. Each first data field 722 is a non-public data field, and each second data field 724 is a public data field. Content of each second data field 724 could also be uploaded via a document file. In the current embodiment, the content named "certificate" and "user guide" could be uploaded via respective document files. A format of each document file could be PDF, DOC, JPG, or PNG.

The first user could operate the first electronic device 22 to connect to the server 10 in order to edit the contents of the first data fields 722 and the second data fields 724 of the object form 70. By clicking a button image 74 and a button image 76, which are labeled 'Upload', the document files for the certificate and the user guide are uploaded, respectively.

Step S12: reading, by the first electronic device 22, the RFID tag 60 to obtain the unique identifier code of the RFID tag 60 and transmitting, by the first electronic device 22, the unique identifier code to the server 10.

In the current embodiment, the first electronic device 22 reads the RFID tag 60 through the RFID tag read-write module 224 to obtain the unique identifier code. The first electronic device 22 transmits the unique identifier code to the server 10. After the server 10 obtains the unique identifier code, the server generates the link URL based on the unique identifier code, and then transmits the link URL to the first electronic device 22. The first electronic device 22 records the link URL. The server 10 further inserts the unique identifier code into one of the second data fields 724 of the object form 70, which is the second data field 724 named " Serial Number (UID)."

Additionally, the server 10 stores a prefix URL of the storage platform 30, which is used to link to the storage space of the storage platform 30. The server 10 combines the prefix URL with the unique identifier code to generate the link URL.

For example, if the prefix URL is 'https://dpp...com/storagespace/', and the unique identifier code is 'E0022304FAACB564', the link URL generated by the server 10 would be 'https://dpp...com/storagespace/E0022304FAACB564'.

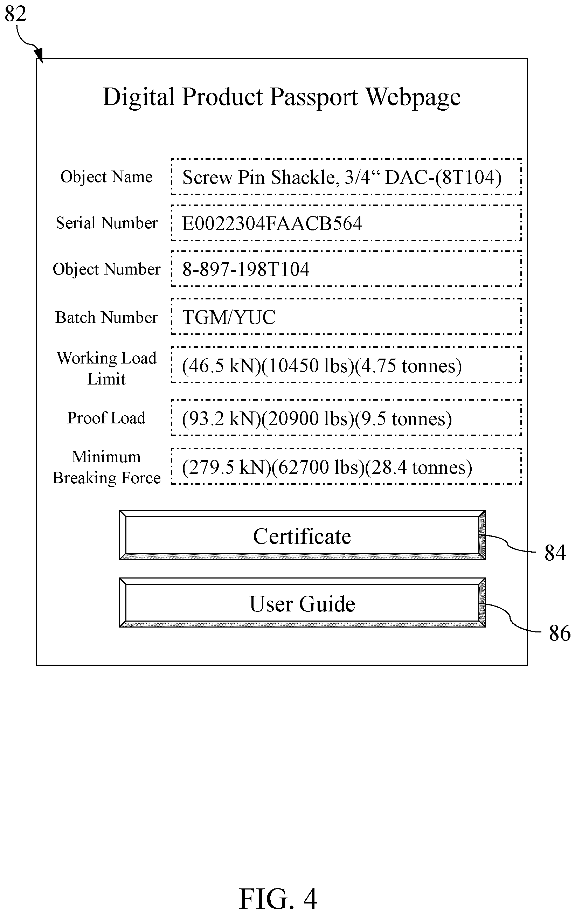

Moreover, the server 10 creates a storage path in the storage space of the storage platform 30, wherein a name of the storage path is the unique identifier code. The server 10 transmits a digital product passport webpage 82 (as shown in FIG. 4) to the storage path of the storage space. In the current embodiment, the digital product passport webpage 82 is a template webpage and is designed to link a set of object information. At this stage, the set of object information has not yet been stored in the storage path.

Step S13: writing, through the first electronic device 22, the link URL into the RFID tag 60, wherein the link URL corresponds to the unique identifier code.

In the current embodiment, the first electronic device 22 writes the link URL into the memory of the RFID tag 60 through the RFID tag read-write module 224. After the writing is completed, the RFID tag read-write module 224 disables the writing function of the memory, making the memory read-only. Therefore, no further data could be written to the memory. Only the RFID tag read-write module 224 or the RFID tag reading module 244 could read the unique identifier code and the link URL in the memory.

In the current embodiment, the link URL of the first electronic device 22 is provided by the server 10. In other embodiments, the first electronic device 22 might store the prefix URL of the storage platform 30. For example, in Step S12, the server 10 transmits the prefix URL to the first electronic device 22, and after the first electronic device 22 obtains the unique identifier code through the RFID tag read-write module 224, the first electronic device 22 combines the prefix URL with the unique identifier code to generate the link URL.

In any step of Step S11, Step S12, or Step S13, the first user could operate the first electronic device 22 to connect to the server 10 in order to edit the content of each first data field 722 and each second data field 724 of the object form 70. The first user operates the first electronic device 22 and clicks a button image 78 labeled "Save" shown in FIG. 3, saving the object form 70 in the database 12.

When the first user operates the first electronic device 22 and clicks a button image 80 labeled "Publish" shown in FIG. 3, a publish command is formed. The first electronic device 22 transmits the publish command to the server 10. When the server 10 receives the publish command, the method for managing the information of the object executes the following steps.

Step S14: transmitting, by the server 10, the second data fields 724 of the object form 70 to the storage platform 30, thereby forming the set of object information, wherein the digital product passport webpage 82 stored in the storage platform 30 is linked to the set of object information; the link URL is used to link to the digital product passport webpage 82 of the storage platform 30.

In the current embodiment, after the server 10 receives the publish command, the server 10 transmits (or copies) the second data fields 724 of the object form 70 to the storage path within the storage space of the storage platform 30 for storage. The set of object information might include a name and the content of each of the second data fields 724, as well as the document files for the certificate and the user guide. The digital product passport webpage 82 links to the set of object information. The document files are respectively linked via the button image 84 and the button image 86 on the digital product passport webpage 82. The first data fields 722 of the object form 70 are not transmitted to the storage platform 30.

When the first electronic device 22 reads the RFID tag 60 on the object 50 through the RFID tag read-write module 224, or when the second electronic device 24 reads the RFID tag 60 on the object 50 through the RFID tag reading module 244, the first electronic device 22 or the second electronic device 24 could obtain the unique identifier code of the RFID tag 60 and the link URL stored in its memory. The first electronic device 22 or the second electronic device 24 could then open the link URL through a web browser to connect to the digital product passport webpage 82 in the storage platform 30. The digital product passport webpage 82 is displayed on the first screen 222 or the second screen 242, allowing access to a plurality of the public information in the digital product passport webpage 82. By clicking the button image 84 and 86, the corresponding document files, such as the certificate and the user guide, could be downloaded.

The above are the main steps of the method for managing the information of the object. Through the main steps, each electronic device 20 could display the digital product passport webpage 82 through the web browser without needing to install a dedicated application. Moreover, the public information of the object 50 (i.e., the second data fields 724) is additionally transmitted and stored in the storage platform 30, each electronic device 20 accesses the digital product passport webpage 82 from the storage platform 30. Therefore, the performance of the server 10 is not affected. Particularly in cases where a plurality of digital product passport webpages 82 correspond to respective objects 50, accessing the digital product passport webpages 82 from the storage platform 30 does not affect the performance of the server 10. Additionally, since the storage platform 30 and the server 10 are located in different domains, accessing the digital product passport webpage 82 from the storage platform 30 could reduce the risk of potential cyberattacks on the server 10.

When the first electronic device 22 or the second electronic device 24 connects to the storage platform 30 to access the digital product passport webpage 82, the storage platform 30 records a browsing history, which might include, for example, an IP address of the first electronic device 22 or the second electronic device 24.

Moreover, when the first electronic device 22 or the second electronic device 24 runs the dedicated application and reads the unique identifier code of the RFID tag 60 through the RFID tag read-write module 224 or the RFID tag read-write module 244, the first electronic device 22 or the second electronic device 24 transmits the unique identifier code to the server 10. Then, the server 10 transmits a page of the object form 70 to the first electronic device 22 or the second electronic device 24 based on the unique identifier code. The page of the object form 70 is then displayed on the first screen 222 or the second screen 242. Thus, each electronic device 20 could use the dedicated application to obtain the non-public information and the public information of the object 50.

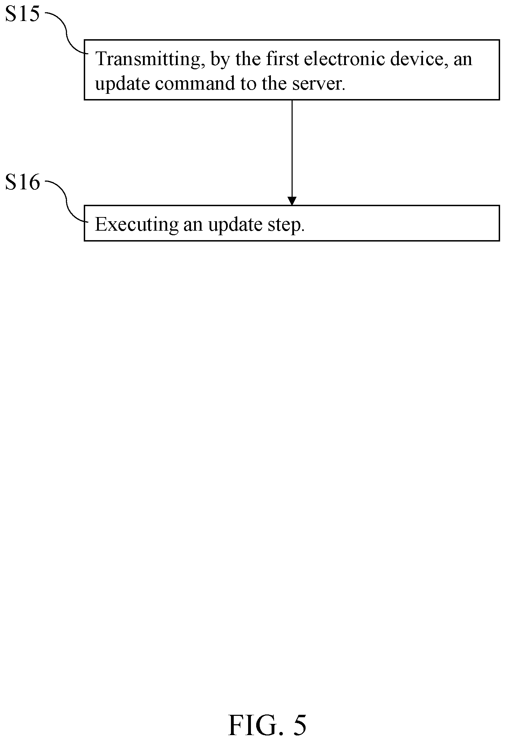

In the current embodiment, the method for managing the information of the object could include step S15 and step S16 as shown in FIG. 5 for updating the set of object information in the storage platform 30.

Step S15: transmitting, by the first electronic device 22, an update command to the server 10. In the current embodiment, the first user operates the first electronic device 22 to send the update command to the server 10. For example, a button image (not shown) labeled "Save" is provided on the object form 70, which the first user could click on the first electronic device 22 to generate the update command.

Step S16: Executing an update step, which includes:
Receiving, by the server 10, the update command and transmitting, by the server 10, a disable command to the storage platform 30. Upon receiving, by the storage platform 30, the disable command, disabling, by the storage platform 30, the digital product passport webpage 82, thereby temporarily setting the digital product passport webpage 82 as unavailable.

Connecting the first electronic device 22 to the server 10 and editing, by the first electronic device 22, any of the second data fields 724 in the object form 70. In the current embodiment, operating the first electronic device 22 by the first user to edit any of the second data fields 724.

Transmitting the publish command to the server 10 by the first electronic device 22. In the current embodiment, operating the first electronic device 22 by the first user to transmit the publish command to the server 10.

Upon receiving the publish command by the server 10, transmitting, by the server 10, the second data fields 724 of the object form 70 to the storage path within the storage space of the storage platform 30, thereby updating the set of object information, wherein the digital product passport webpage 82 links to the updated set of object information.

Transmitting an enable command to the storage platform 30 by the server 10. Upon receiving the enable command by the storage platform 30, enabling the digital product passport webpage 82 by the storage platform 30, thereby setting the digital product passport webpage 82 as public for access by each electronic device 20.

Moreover, to avoid inconsistencies between the updated set of object information and the old set of object information, which might cause inconvenience for the second user who has accessed the digital product passport webpage 82 through the second electronic device 24. In the current embodiment, upon receiving the update command by the server 10, transmitting, by the server 10, an inquiry command to the storage platform 30 to ask whether the storage platform 30 has the browsing history of the digital product passport webpage 82.

When the storage platform 30 has no browsing history, indicating that the digital product passport webpage 82 has not been accessed, proceeding to step S16 allows the editing of any second data field 724 on the object form 70 and the updating the set of object information in the storage platform 30.

When the storage platform 30 has the browsing history, indicating that the digital product passport webpage 82 has been accessed, the server 10 further determines, based on the browsing history, whether only the first electronic device 22 has accessed the digital product passport webpage 82. For example, in step S11, when the first electronic device 22 connects to the server 10, the server 10 records the IP address of the first electronic device 22; in step S15, the server 10 compares the browsing history to check if the browsing history only includes the IP address of the first electronic device 22 and no IP address of another electronic device 20 (i.e., the second electronic device 24).

If the browsing history only includes the IP address of the first electronic device 22, indicating that only the first user has accessed the digital product passport webpage 82 through the first electronic device 22, executing step S16 allows the editing of any second data field 724 on the object form 70 and the updating the set of object information in the storage platform 30.

If another user (i.e., the second user) has accessed the digital product passport webpage 82 through another electronic device 20 (i.e., the second electronic device 24), executing step S16 is prohibited. Moreover, transmitting a notification message to the first electronic device 22 by the server 10 to inform the first user that the digital product passport webpage 82 has been accessed by another electronic device 20, thereby prohibiting the editing of any second data field 724 on the object form 70 and preventing the updating of the set of object information in the storage platform 30.

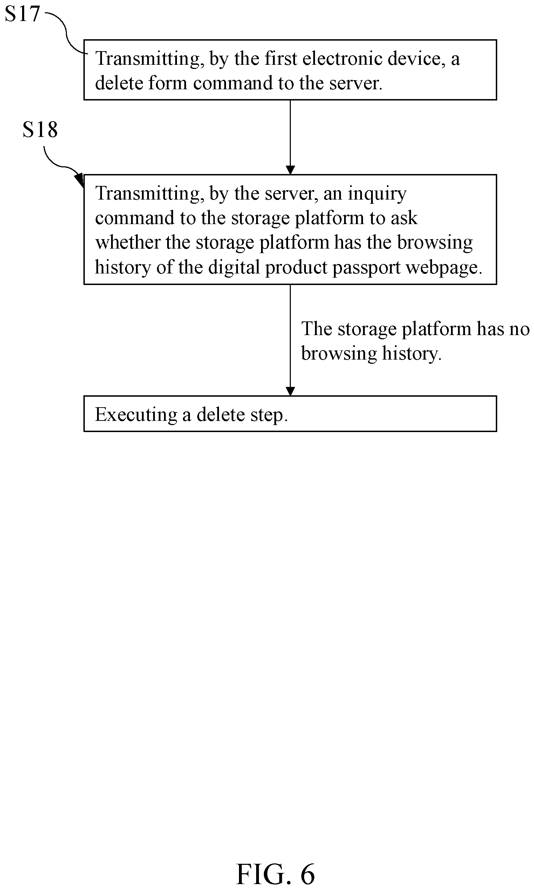

As shown in FIG. 6, the method for managing the information of the object in the current embodiment might include step S17 and step S18 after step S14, for deleting the object form 70, the digital product passport webpage 82 in the storage platform 30, and the set of object information in the storage platform 30.

Step S17: transmitting, by the first electronic device 22, a delete form command to the server 10. In the current embodiment, the first user operates the first electronic device 22 to transmit the delete form command to the server 10. For example, a button image (not shown) labeled "Delete" is provided on the object form 70, which the first user could click on the first electronic device 22 to generate the delete form command.

Step S18: upon receiving the delete form command by the server 10, transmitting, by the server 10, an inquiry command to the storage platform 30 to ask whether the storage platform 30 has the browsing history of the digital product passport webpage 82.

When the storage platform 30 has no browsing history, the method for managing the information of the object further includes executing a delete step, wherein the delete step includes the following steps.

Deleting the object form 70 by the server 10 and transmitting a delete command to the storage platform 30 by the server 10.

Upon receiving the delete command by the storage platform 30, deleting, by the storage platform 30, the set of object information and the digital product passport webpage 82.

When the storage platform 30 has the browsing history, the server 10 further determines, based on the browsing history, whether only the first electronic device 22 has accessed the digital product passport webpage 82. For example, the server 10 compares the browsing history to check if the browsing history only includes the IP address of the first electronic device 22 and no IP address of another electronic device 20 (i.e., the second electronic device 24).

If the browsing history only includes the IP address of the first electronic device 22, executing the delete step.

If the browsing history includes the IP address of the second electronic device 24, executing the delete step is prohibited. Moreover, transmitting a notification message to the first electronic device 22 by the server 10 to inform the first user that the digital product passport webpage 82 has been accessed by another electronic device 20 (i.e., the second electronic device 24), thereby prohibiting the deletion of the object form 70 and prohibiting the deletion of the set of object information and the digital product passport webpage 82 in the storage platform 30.

In the above, step S17 and step S18 are not limited to being executed after step S15 and step S16; step S17 and step S18 might also be performed directly after step S14, omitting step S15 and step S16. Alternatively, after step S14, step S15 and step S16 might be executed directly, omitting step S17 and step S18.

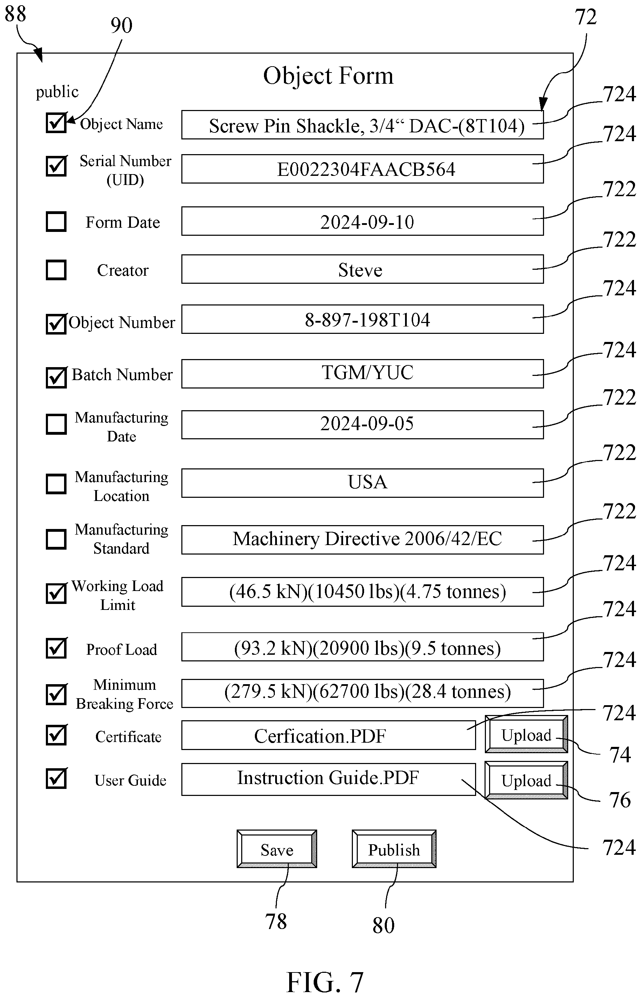

As shown in FIG. 7, an object form 88 according to a second embodiment of the present invention is based on the object form 70 of the first embodiment and further includes a plurality of checkboxes 90. Each of the checkboxes 90 is provided for the first user to select through the first electronic device 22. More specifically, in step S11, the data fields 72 in the object form 88 selected by one of the electronic devices 20 form the second data fields 724, while the data fields 72 that are unselected form the first data field 722. In other words, each of the selected checkboxes 90 forms the second data field 724, while each of the unselected data fields 72 form the first data field 722. Thus, the first user could select the desired data fields 72 for public disclosure by utilizing the checkboxes 90.

## Claims

1. A method for managing information of an object (50), comprising steps of:
A. connecting an electronic device (20) to a server (10) and creating, by the electronic device (20), an object form (70, 88) in the server (10), wherein the object form (70, 88) comprises a plurality of data fields (72); the data fields (72) comprise a plurality of first data fields (722) and a plurality of second data fields (724);
B. reading, by the electronic device (20), an RFID tag (60) to obtain a unique identifier code of the RFID tag (60) and transmitting, by the electronic device (20), the unique identifier code to the server (10);
C. writing, through the electronic device (20), a link URL into the RFID tag (60), wherein the link URL corresponds to the unique identifier code; and
D. transmitting, by the server (10), the second data fields (724) of the object form (70, 88) to a storage platform (30), thereby forming a set of object information; a digital product passport webpage (82) stored in the storage platform (30) is linked to the set of object information; the link URL is used to link to the digital product passport webpage (82) of the storage platform (30).

2. The method for managing the information of the object (50) as claimed in claim 1, wherein step B comprises:
generating, by the server (10), the link URL based on the unique identifier code and transmitting, by the server (10), the link URL to the electronic device (20).

3. The method for managing the information of the object (50) as claimed in claim 2, wherein the server (10) stores a prefix URL of the storage platform (30); in step B, the server (10) combines the prefix URL with the unique identifier code to generate the link URL.

4. The method for managing the information of the object (50) as claimed in claim 1, wherein the electronic device (20) stores a prefix URL of the storage platform (30); in step B, the electronic device (20) combines the prefix URL with the unique identifier code to generate the link URL.

5. The method for managing the information of the object (50) as claimed in claim 4, wherein the server (10) stores the prefix URL of the storage platform (30) and transmits the prefix URL to the electronic device (20).

6. The method for managing the information of the object (50) as claimed in claim 1, further comprising transmitting, by the electronic device (20), a publish command to the server (10) before step D; step D is executed after the server (10) receives the publish command.

7. The method for managing the information of the object (50) as claimed in claim 6, further comprising the following steps after step D:
E. transmitting, by the electronic device (20), an update command to the server (10); and
F. executing an update step, wherein the update step comprises:
transmitting, by the server (10), a disable command to the storage platform (30) and disabling, by the storage platform (30), the digital product passport webpage (82);
connecting the electronic device (20) to the server (10) and editing, by the electronic device (20), any of the second data fields (724) in the object form (70, 88);
transmitting, by the electronic device (20), the publish command to the server (10);
transmitting, by the server (10), the second data fields (724) of the object form (70, 88) to the storage platform (30) to update the set of object information, wherein the digital product passport webpage (82) links to the updated set of object information; and
transmitting, by the server (10), an enable command to the storage platform (30) and enabling, by the storage platform (30), the digital product passport webpage (82).

8. The method for managing the information of the object (50) as claimed in claim 7, wherein step E comprises:
receiving, by the server (10), the update command and transmitting, by the server (10), an inquiry command to the storage platform (30) to ask whether the storage platform (30) has a browsing history of the digital product passport webpage (82); and
proceeding to step F when the storage platform (30) has no browsing history.

9. The method for managing the information of the object (50) as claimed in claim 8, wherein the number of the electronic device (20) is two; the electronic devices (20) are defined as a first electronic device (22) and a second electronic device (24); step E comprises:
determining, by the server (10), based on the browsing history, whether only the first electronic device (22) has accessed the digital product passport webpage (82) when the storage platform (30) has the browsing history;
executing step F if only the first electronic device (22) has accessed the digital product passport webpage (82); and
prohibiting execution of step F and transmitting a notification message from the server (10) to the first electronic device (22) if the second electronic device (24) has accessed the digital product passport webpage (82).

10. The method for managing the information of the object (50) as claimed in claim 1, further comprising the following steps after step D:
transmitting, by the electronic device (20), a delete form command to the server (10);
transmitting, by the server (10), an inquiry command to the storage platform (30) to ask whether the storage platform (30) has a browsing history of the digital product passport webpage (82); and
executing a delete step when the storage platform (30) has no browsing history, wherein the delete step comprises:
deleting, by the server (10), the object form (70, 88) and transmitting, by the server (10), a delete command to the storage platform (30); and
deleting, by the storage platform (30), the set of object information and the digital product passport webpage (82).

11. The method for managing the information of the object (50) as claimed in claim 10, wherein the number of the electronic device (20) is two; the electronic devices (20) are defined as a first electronic device (22) and a second electronic device (24); the method for managing the information of the object (50) further comprising:
determining, by the server (10), based on the browsing history, whether only the first electronic device (22) has accessed the digital product passport webpage (82) when the storage platform (30) has the browsing history;
executing the delete step if only the first electronic device (22) has accessed the digital product passport webpage (82); and
prohibiting execution of the delete step and transmitting a notification message from the server (10) to the first electronic device (22) if the second electronic device (24) has accessed the digital product passport webpage (82).

12. The method for managing the information of the object (50) as claimed in claim 1, wherein step A comprises:
selecting a portion of the data fields (72) in the object form (88), by the electronic device (20), to form the second data fields (724).

## Amended claims

### Amended claims in accordance with Rule 137(2) EPC.

1. A method for managing information of an object (50), comprising steps of:
A. connecting an electronic device (20) to a server (10) and creating, by the electronic device (20), an object form (70, 88) in the server (10), wherein the object form (70, 88) comprises a plurality of data fields (72); the data fields (72) comprise a plurality of first data fields (722) and a plurality of second data fields (724);
B. reading, by the electronic device (20), an RFID tag (60) to obtain a unique identifier code of the RFID tag (60) and transmitting, by the electronic device (20), the unique identifier code to the server (10);
C. writing, through the electronic device (20), a link URL into the RFID tag (60), wherein the link URL corresponds to the unique identifier code; and
D. transmitting, by the server (10), the second data fields (724) of the object form (70, 88) to a storage platform (30), thereby forming a set of object information; a digital product passport webpage (82) stored in the storage platform (30) is linked to the set of object information; the link URL is used to link to the digital product passport webpage (82) of the storage platform (30);
**characterized in that**:
the storage platform (30) and the server (10) are located in different domains;
the method further comprises transmitting, by the electronic device (20), a publish command to the server (10) before step D; step D is executed after the server (10) receives the publish command; and
the method further comprises the following steps after step D:
E. transmitting, by the electronic device (20), an update command to the server (10); and
F. executing an update step, wherein the update step comprises:
transmitting, by the server (10), a disable command to the storage platform (30) and disabling, by the storage platform (30), the digital product passport webpage (82);
connecting the electronic device (20) to the server (10) and editing, by the electronic device (20), any of the second data fields (724) in the object form (70, 88);
transmitting, by the electronic device (20), the publish command to the server (10);
transmitting, by the server (10), the second data fields (724) of the object form (70, 88) to the storage platform (30) to update the set of object information, wherein the digital product passport webpage (82) links to the updated set of object information; and
transmitting, by the server (10), an enable command to the storage platform (30) and enabling, by the storage platform (30), the digital product passport webpage (82).

2. The method for managing the information of the object (50) as claimed in claim 1, wherein step B comprises:
generating, by the server (10), the link URL based on the unique identifier code and transmitting, by the server (10), the link URL to the electronic device (20).

3. The method for managing the information of the object (50) as claimed in claim 2, wherein the server (10) stores a prefix URL of the storage platform (30); in step B, the server (10) combines the prefix URL with the unique identifier code to generate the link URL.

4. The method for managing the information of the object (50) as claimed in claim 1, wherein the electronic device (20) stores a prefix URL of the storage platform (30); in step B, the electronic device (20) combines the prefix URL with the unique identifier code to generate the link URL.

5. The method for managing the information of the object (50) as claimed in claim 4, wherein the server (10) stores the prefix URL of the storage platform (30) and transmits the prefix URL to the electronic device (20).

6. The method for managing the information of the object (50) as claimed in claim 1, wherein step E comprises:
receiving, by the server (10), the update command and transmitting, by the server (10), an inquiry command to the storage platform (30) to ask whether the storage platform (30) has a browsing history of the digital product passport webpage (82); and
proceeding to step F when the storage platform (30) has no browsing history.

7. The method for managing the information of the object (50) as claimed in claim 6, wherein the number of the electronic device (20) is two; the electronic devices (20) are defined as a first electronic device (22) and a second electronic device (24); step E comprises:
determining, by the server (10), based on the browsing history, whether only the first electronic device (22) has accessed the digital product passport webpage (82) when the storage platform (30) has the browsing history;
executing step F if only the first electronic device (22) has accessed the digital product passport webpage (82); and
prohibiting execution of step F and transmitting a notification message from the server (10) to the first electronic device (22) if the second electronic device (24) has accessed the digital product passport webpage (82).

8. The method for managing the information of the object (50) as claimed in claim 1, further comprising the following steps after step D:
transmitting, by the electronic device (20), a delete form command to the server (10);
transmitting, by the server (10), an inquiry command to the storage platform (30) to ask whether the storage platform (30) has a browsing history of the digital product passport webpage (82); and
executing a delete step when the storage platform (30) has no browsing history, wherein the delete step comprises:
deleting, by the server (10), the object form (70, 88) and transmitting, by the server (10), a delete command to the storage platform (30); and
deleting, by the storage platform (30), the set of object information and the digital product passport webpage (82).

9. The method for managing the information of the object (50) as claimed in claim 8, wherein the number of the electronic device (20) is two; the electronic devices (20) are defined as a first electronic device (22) and a second electronic device (24); the method for managing the information of the object (50) further comprising:
determining, by the server (10), based on the browsing history, whether only the first electronic device (22) has accessed the digital product passport webpage (82) when the storage platform (30) has the browsing history;
executing the delete step if only the first electronic device (22) has accessed the digital product passport webpage (82); and
prohibiting execution of the delete step and transmitting a notification message from the server (10) to the first electronic device (22) if the second electronic device (24) has accessed the digital product passport webpage (82).

10. The method for managing the information of the object (50) as claimed in claim 1, wherein step A comprises:
selecting a portion of the data fields (72) in the object form (88), by the electronic device (20), to form the second data fields (724).
